# EUROPÄISCHE PATENTSCHRIFT

(11) **EP 3 511 684 B1**
(45) Veröffentlichungstag und Bekanntmachung des Hinweises auf die Patenterteilung: **25.12.2019**
(21) Anmeldenummer: 18213293.6
(22) Anmeldetag: 18.12.2018
(51) Int. Cl.: G01F 23/284, H01Q 1/22, G01F 23/00, G01S 13/88

(54) **FÜLLSTANDMESSGERÄT**
FILL LEVEL MEASURING DEVICE
APPAREIL DE MESURE DE NIVEAU DE REMPLISSAGE

(30) Priorität: 16.01.2018 DE 102018100845
(43) Veröffentlichungstag der Anmeldung: 17.07.2019
(73) Patentinhaber: Krohne Messtechnik GmbH, 47058 Duisburg (DE)
(72) Erfinder: Schmits, Christoph, 44149 Dortmund (DE); Linkies, Mathias, 45478 Mülheim Mülheim (DE); Ouzounis, Charalambos, 44805 Bochum (DE); Schulz, Christian, 44791 Bochum (DE)
(74) Vertreter: Gesthuysen Patent- und Rechtsanwälte

(56) Entgegenhaltungen:
- EP-A2- 2 623 944
- WO-A1-2009/100891
- DE-A1-102010 027 962
- US-A1- 2015 377 680
- US-A1- 2018 010 949
- US-B1- 9 163 974

## Beschreibung

Die Erfindung geht aus von einem Füllstandmessgerät mit wenigstens einer Sende- und Empfangseinheit umfassend eine Messantenne, wobei die Messantenne ein erstes Speiseelement zur Aussendung und für den Empfang eines elektromagnetischen Messsignals und wenigstens einen dielektrischen Körper zur Wellenführung und/oder zur Wellenformung des Messsignals aufweist, und eine Kommunikationsantenne, wobei die Kommunikationsantenne wenigstens ein zweites Speiseelement zur Aussendung und für den Empfang eines elektromagnetischen Kommunikationssignals aufweist.

Auf einem Radar-Verfahren basierende Füllstandmessgeräte, die über eine drahtlose Verbindung beispielsweise mit zentralen Steuereinheiten kommunizieren, sind aus dem Stand der Technik bekannt.

Aus der Druckschrift DE 10 2007 057 211 A1 ist eine Vorrichtung zum Erfassen des Füllstandes eines mit einem Verschluss verschließbaren Behältnisses, wobei der Füllstandsensor, die Energieversorgung, die Auswerteeinheit und die Sendeeinheit in dem Verschluss vergossen sind. Die Sendeeinheit ist vorzugsweise als Funk-, IR-, GSM- und/oder WLAN-Sender ausgebildet.

Aus der Druckschrift DE 29 25 063 ist eine Radarantenne mit integrierter IFF-Antenne bekannt.

Die DE 10 2010 027 962 A1 betrifft ein drahtlos kommunizierendes Füllstandmessgerät umfassend eine Kommunikationsantenne und eine separate auf das zu messende Füllgut auszurichtende Messantenne.

Eine Vorrichtung zur Bestimmung der Fließgeschwindigkeit und des Pegelstandes eines Mediums basierend auf einem Radarverfahren, wobei die Antennenanordnung eine erste Antenne zum Abstrahlen eines FMCW - Sendesignals in eine erste Richtung und eine zweite Antenne zum Abstrahlen eines CW - Sendesignals in eine zweite Richtung aufweist ist aus der Druckschrift EP 2 824 433 A1 bekannt.

Die WO 2009/100891 A1 spezifiziert ein weiteres Füllstandmessgerät mit wenigstens einer Sende- und Empfangseinheit gemäß dem Stand der Technik.

Problematisch an den aus dem Stand der Technik bekannten Füllstandmessgeräten ist, dass zur Realisierung einer drahtlosen Kommunikation mit dem Messgerät das Kommunikationssignal über eine dazu geeignete Übertragungseinheit ausgekoppelt werden muss. Eine solche Übertragungseinheit ist jedoch stets auch ein weiterer Schwachpunkt des Messgeräts, da jede mechanische Verbindung mit dem Messgerät auch weitere Dichtflächen bedingt. Insofern erfüllen entsprechende Messgeräte häufig nicht die Anforderungen höherer IP-Klassen in Bezug auf eine wasserdichte Ausgestaltung.

Ausgehend von dem zuvor dargelegten Stand der Technik liegt der Erfindung die Aufgabe zugrunde, ein Füllstandmessgerät anzugeben, das besonders einfach ausgestaltet ist und gleichzeitig flexibel eingesetzt werden kann.

Gemäß einer ersten Lehre wird die zuvor genannte Aufgabe durch ein eingangs beschriebenes Füllstandmessgerät dadurch gelöst, dass das erste Speiseelement und das zweite Speiseelement innerhalb des dielektrischen Körpers angeordnet sind, sodass der dielektrische Körper zur Führung und/oder Formung des Messsignals und des Kommunikationssignals ausgestaltet ist.

Erfindungsgemäß wurde erkannt, dass der Körper zur Wellenführung und/oder zur Wellenformung der Messantenne ebenfalls zur Führung eines weiteren elektromagnetischen Kommunikationssignals genutzt werden kann, sodass im Ergebnis ein einziger dielektrischer Körper zur Weiterleitung von zwei unterschiedlichen elektromagnetischen Signalen genutzt werden kann. In vorteilhafter Weise kann so zum einen drahtlos mit dem Füllstandmessgerät kommuniziert werden, und zum anderen kann darauf verzichtet werden, weitere Übertragungselemente, die wiederum weitere Dichtflächen mit sich bringen, zur Auskopplung des drahtlosen Kommunikationssignals vorzusehen.

Damit ist das erfindungsgemäße Füllstandmessgerät besonders einfach ausgestaltet und erfüllt darüber hinaus auch die Anforderungen höherer IP-Klassen in Bezug auf eine wasserdichte Ausgestaltung, da es lediglich eine Dichtfläche zwischen der Messantenne und dem Elektronikgehäuse aufweist, so dass es ebenfalls zur Bestimmung von flüssigen Medien besonders geeignet ist.

Gemäß einer vorteilhaften Ausgestaltung ist die geometrische Form und die Abstrahlrichtung des zweiten Speiseelementes an das Material und an die Form des dielektrischen Körpers derart angepasst, sodass sowohl das Messsignal als auch das Kommunikationssignal optimal aus dem dielektrischen Körper ausgekoppelt werden können.

Beispielsweise kann die Messantenne als Tropfenantenne ausgestaltet sein, wobei das erste Speiseelement und das zweite Speiseelement innerhalb des tropfenförmigen dielektrischen Körpers angeordnet sind. Der dielektrische Körper kann jedoch auch jede andere geeignete Form aufweisen. Beispielsweise kann der dielektrische Körper rund oder halbellipsoidförmig ausgestaltet sein.

Zudem kann der dielektrische Körper ein- oder mehrteilig ausgestaltet sein. Eine mehrteilige Ausgestaltung weist beispielsweise wenigstens zwei geometrisch verschiedene Teile auf, insgesamt ist der dielektrische Körper jedoch aus einem Werkstück hergestellt. Gemäß einer Ausgestaltung ist ein erster Teil des dielektrischen Körpers zur Auskopplung des Kommunikationssignals ausgestaltet, und ein zweiter Teil des dielektrischen Körpers ist als Linsenkörper zur Führung und Auskopplung des Messsignals ausgestaltet.

Der dielektrische Körper besteht vorzugsweise aus Kunststoff, beispielsweise aus PP, PTFE oder PEEK.

Das erste Speiseelement der Messantenne ist gemäß einer Ausgestaltung als Hohlleiter ausgestaltet. Alternativ kann das erste Speiseelement ebenfalls als Hornstrahler oder als Patchelement ausgestaltet sein.

Gemäß einer weiteren Ausgestaltung ist das erste Speiseelement als metallischer Hohlleiter oder als metallischer Hornstrahler ausgebildet, wobei die Länge des Hohlleiters oder des Hornstrahlers vorzugsweise im Wesentlichen der Länge des dielektrischen Körpers entspricht oder zumindest dem zweifachen oder dreifachen Wert der Länge des zweiten Speiseelementes. Diese Ausgestaltung weist den Vorteil auf, dass aufgrund der Länge des Hohlleiters bzw. des Hornstrahlers und seiner materiellen Ausgestaltung Abschirmungseffekte, die später genauer beschreiben werden, zwischen dem ersten Speiseelement und dem zweiten Speiseelement gewährleistet sind.

Gemäß einer weiteren Ausgestaltung ist das zweite Speiseelement als Stab, vorzugsweise als Stahlstift, oder als aufklebbarer Antennenkörper oder als Folienantennenkörper ausgestaltet. Dabei ist die Form des zweiten Speiseelementes, also des Antennenkörpers, angepasst an die jeweilige Anwendung. Beispielsweise kann das zweite Speiseelement gerade, gebogen oder verzweigt ausgebildet sein.

Gemäß einer weiteren Ausgestaltung ist das zweite Speiseelement, vorzugsweise um wenigstens einen Faktor 2, kürzer als das erste Speiseelement ausgebildet.

Gemäß einer nächsten Ausgestaltung sind das erste Speiseelement und das zweite Speiseelement derart angeordnet, dass das Messsignal und das Kommunikationssignal in unterschiedliche Richtungen abgestrahlt werden. Besonders vorteilhaft ist es, wenn der Winkel zwischen der Ausbreitungsrichtung des Messsignals und der Ausbreitungsrichtung des Kommunikationssignals ungefähr 90° beträgt.

Der Winkel zwischen der Ausbreitungsrichtung des Messsignals und des Kommunikationssignals ist gemäß einer weiteren Ausgestaltung größer als 90° und gemäß einer dazu alternativen Ausgestaltung kleiner als 90°.

Das erste Speiseelement und das zweite Speiseelement sind gemäß einer weiteren Ausgestaltung derart angeordnet, dass das Messsignal und das Kommunikationssignal zumindest teilweise in die gleiche Richtung abgestrahlt werden. Diese Ausgestaltung ist insbesondere vorteilhaft, wenn das Füllstandmessgerät zur Vermessung eines Mediums, das nicht in einem geschlossenen und leitfähigen Behälter angeordnet ist, verwendet wird.

Gemäß einer nächsten Ausgestaltung umfasst die Kommunikationsantenne eine Elektronikeinheit und die Elektronikeinheit und das zweite Speiseelement der Kommunikationsantenne zur Aussendung eines Kommunikationssignals sind nach einem der folgenden Standards ausgebildet: Bluetooth, GPS, GSM, LTE, Zigbee, Z-Wave, IOT Standards, Wireless HART, drahtlose Feldbusstandards, WLAN, 5G, UMTS, CDMA.

Gemäß einer Ausgestaltung ist die Kommunikationsantenne als Netzwercknoten in einer Punkt-zu-Punkt-Verbindung oder in einem Mesh-Netzwerk ausgestaltet.

Gemäß einer nächsten Ausgestaltung ist das Füllstandmessgerät ausgebildet zur Messung des Füllstandes innerhalb eines Behälters, wobei wenigstens ein Montageelement vorhanden ist, wobei das Montageelement bewirkt, dass das zweite Speiseelement im Montagezustand zumindest teilweise im Außenbereich des Behälters angeordnet ist. Auf diese Weise kann gewährleistet werden, dass das Kommunikationssignal außerhalb des Behälters wahrnehmbar ist. Dies ist insbesondere dann relevant, wenn der Behälter sowohl geschlossen als auch leitfähig ist. Ist der Behälter nicht vollständig geschlossen und/oder besteht er nicht aus einem leitfähigen Material, ist es ebenfalls möglich, das Kommunikationssignal zumindest teilweise in den Behälter abzustrahlen und zur Erfassung auszukoppeln.

Vorzugsweise ist das Montageelement als Gewinde und/oder als Flansch und/oder als rohrförmiger Abstandhalter ausgestaltet. Das Gewinde kann beispielsweise in dem dielektrischen Körper ausgebildet sein, wobei das Gewinde zur Anbindung an den Behälter beispielsweise in einen Flansch oder unmittelbar in die Behälterwand eingeschraubt werden kann. Alternativ oder zusätzlich kann ein Flansch beispielsweise durch den dielektrischen Körper ausgebildet sein oder an dem dielektrischen Körper angeordnet sein, wobei über den Flansch eine Anbindung der Sende- und Empfangseinheit an den Behälter derart erfolgt, dass die Kommunikationsantenne zumindest teilweise im Außenbereich des Behälters angeordnet ist. Alternativ oder zusätzlich kann das Montageelement auch als rohrförmiger Abstandhalter ausgestaltet sein, wobei der Abstandhalter im Montagezustand zwischen der Behälterwand und beispielsweise dem Elektronikgehäuse des Füllstandmessgeräts angeordnet ist. Gemäß einer bevorzugten Ausgestaltung ist der rohrförmige Abstandhalter formschlüssig und/oder kraftschlüssig und/oder stoffschlüssig mit dem dielektrischen Körper verbunden. Besonders bevorzugt besteht der rohrförmige Abstandhalter aus Kunststoff und ist durchlässig für das Kommunikationssignal.

Gemäß einer nächsten Ausgestaltung ist eine Abschirmung vorhanden, wobei die Abschirmung derart angeordnet und ausgestaltet ist, dass sie im Betrieb des Füllstandmessgeräts das von dem ersten Speiseelement ausgesendete Messsignal und das von dem zweiten Speiseelement ausgesendete Kommunikationssignal räumlich trennt. Diese Ausgestaltung weist den Vorteil auf, dass eine gegenseitige Beeinflussung der beiden Signale im Wesentlichen ausgeschlossen werden kann.

Gemäß einer besonders bevorzugten Ausgestaltung ist die Abschirmung als metallisches Abschirmungselement ausgestaltet, wobei das metallische Abschirmungselement innerhalb des dielektrischen Körpers angeordnet ist. Das metallische Abschirmungselement kann beispielsweise als metallisches Blech oder als Folie, die zumindest teilweise zwischen der Ausbreitungsrichtung des Kommunikationssignals und der Ausbreitungsrichtung des Messsignals angeordnet ist, ausgestaltet sein. Alternativ oder zusätzlich kann die Abschirmung auch durch die Länge und/oder die geometrische Ausgestaltung des ersten Speiseelements realisiert sein. Ist beispielsweise das erste Speiseelement als metallischer Hornstrahler, dessen Länge im Wesentlichen der Länge des dielektrischen Körpers entspricht, ausgestaltet, so wirkt der Körper des Hornstrahlers abschirmend in Bezug auf das Kommunikationssignal.

Gemäß einer nächsten Ausgestaltung ist wenigstens eine zweite Kommunikationsantenne vorhanden, wobei vorzugsweise wenigstens eine der beiden Kommunikationsantennen als Verbindung zweier Netzwerke mit unterschiedlicher Struktur oder Vermittlungstechnik ausgebildet ist.

Gemäß einer Ausgestaltung weist die zweite Kommunikationsantenne ein drittes Speiseelement auf, wobei das dritte Speiseelement identisch zu dem zweiten Speiseelement oder verschieden von dem zweiten Speiseelement ausgebildet ist.

Im Einzelnen gibt es nun eine Vielzahl von Möglichkeiten, das erfindungsgemäße Füllstandmessgerät auszugestalten und weiterzubilden. Dazu wird verwiesen sowohl auf die den unabhängigen Patentansprüchen nachgeordneten Patentansprüche als auch auf die nachfolgende Beschreibung von bevorzugten Ausführungsbeispielen in Verbindung mit der Zeichnung. In der Zeichnung zeigen
- Fig. 1: eine schematische Darstellung eines ersten Ausführungsbeispiels eines Füllstandmessgeräts,
- Fig. 2: ein zweites Ausführungsbeispiel eines Füllstandmessgeräts mit einem Montageelement,
- Fig. 3: ein drittes Ausführungsbeispiel eines Füllstandmessgeräts mit einem zweiteiligen dielektrischen Körper,
- Fig. 4: ein viertes Ausführungsbeispiel eines Füllstandmessgeräts in Montageposition mit einem Abstandhalter,
- Fig. 5: ein fünftes Ausführungsbeispiel eines Füllstandmessgeräts ebenfalls in Montageposition mit einem Abstandhalter,
- Fig. 6: ein sechstes Ausführungsbeispiel eines Füllstandmessgeräts mit einer Abschirmung,
- Fig. 7: ein siebtes Ausführungsbeispiel eines Füllstandmessgeräts mit besonderer Eignung für offene Anwendungen,
- Fig. 8: ein achtes Ausführungsbeispiel eines Füllstandmessgeräts mit einem kugelförmigen dielektrischen Körper,
- Fig. 9: ein neuntes Ausführungsbeispiel eines Füllstandmessgeräts mit einem dielektrischen Körper in Form eines Halbellipsoids,
- Fig. 10: ein zehntes Ausführungsbeispiel eines Füllstandmessgeräts mit Hornstrahler als Speiseelement und
- Fig. 11: ein elftes Ausführungsbeispiel eines Füllstandmessgeräts mit besonders abgestimmter Geometrie der Speiseelemente.

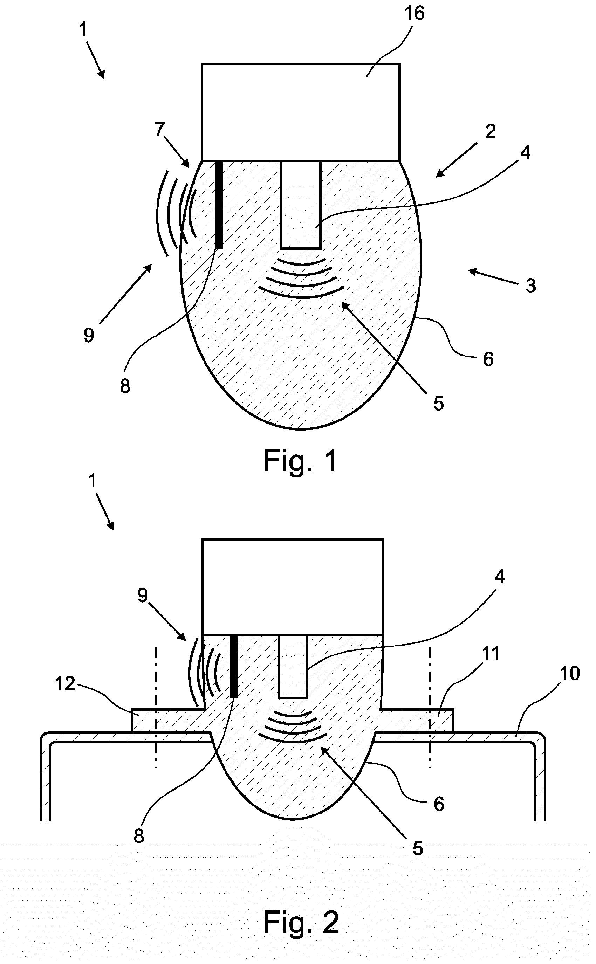

In Fig. 1 ist dargestellt ein Füllstandmessgerät 1 mit einer Sende- und Empfangseinheit 2, wobei die Sende- und Empfangseinheit 2 eine Messantenne 3 umfasst, wobei die Messantenne 3 ein erstes Speiseelement 4 zur Aussendung und für den Empfang eines elektromagnetischen Messsignals 5 und einen dielektrischen Körper 6 aufweist, und wobei eine Kommunikationsantenne 7 vorhanden ist, wobei die Kommunikationsantenne 7 ein zweites Speiseelement 8 zur drahtlosen Aussendung und für den Empfang eines elektromagnetischen Kommunikationssignals 9 aufweist. Dabei sind das erste Speiseelement 4 und das zweite Speiseelement 8 innerhalb des dielektrischen Körpers 6 angeordnet, sodass der dielektrische Körper 6 zur Führung und/oder zur Formung des Messsignals 5 und des Kommunikationssignals 9 ausgestaltet ist.

In vorteilhafterweise kann eine drahtlose Kommunikation mit dem Füllstandmessgerät 1 realisiert werden, ohne zur Ein- und Auskopplung von Kommunikationssignalen 9 weitere Dichtungen in das Füllstandmessgerät 1 einzubringen.

Im dargestellten Ausführungsbeispiel sind das erste Speiseelement 4 und das zweite Speiseelement 8 derart ausgestaltet und angeordnet, dass die Ausbreitungsrichtung des Messsignals 5 und die Ausbreitungsrichtung des Kommunikationssignals 9 einen Winkel von ungefähr 90° einschließen.

Das erste Speiseelement 4 ist vorliegend als einfacher zylinderischer Hohlleiter ausgestaltet. Die Kommunikationsantenne 7 ist als Stiftantenne mit einem stabförmigen Antennenkörper ausgestaltet, wobei die Kommunikationsantenne 7 sowohl geometrisch als auch elektronisch zur Aussendung eines Bluetooth-Signals mit einer Frequenz von ungefähr 2,4 GHz ausgestaltet ist.

Zur Aufnahme der Elektronikeinheit der Kommunikationsantenne 7 und der Elektronikeinheit der Messantenne 3 ist ein Gehäuse 16 vorhanden, das mechanisch mit dem ersten Speiseelement 4, dem zweiten Speiseelement 8 und dem dielektrischen Körper 6 verbunden ist.

In Fig. 2 ist ein weiteres Ausführungsbeispiel eines Füllstandmessgeräts 1 dargestellt, das zur Messung des Füllstandes eines Mediums in einem geschlossenen Behälter 10 ausgestaltet ist. Um zu gewährleisten, dass das Kommunikationssignal 9 im Betrieb des Füllstandmessgeräts 1 erfassbar ist, weist das dargestellte Füllstandmessgerät 1 ein Montageelement 11 in Form eines an dem dielektrischen Körper 6 angeordneten Flansches 12 auf, der bewirkt, dass das zweite Speiseelement 8 im Montagezustand außerhalb des Behälters 10 angeordnet ist.

Im Vergleich zu dem aus dem Stand der Technik bekannten Einsatz eines Füllstandmessgeräts 1 mit dielektrischer Messantenne ist der dielektrische Körper 6 in Bezug auf die obere Behälterwand 10 nach oben versetzt angeordnet. Da das Messsignal im Wesentlichen senkrecht in Richtung des Füllgutes abgestrahlt wird, wirkt sich dieser senkrechte Versatz nicht auf die Messung des Füllstandes aus.

Diese Ausgestaltung ist insbesondere dann vorteilhaft, wenn der Behälter 10 sowohl geschlossen als auch leitfähig ist.

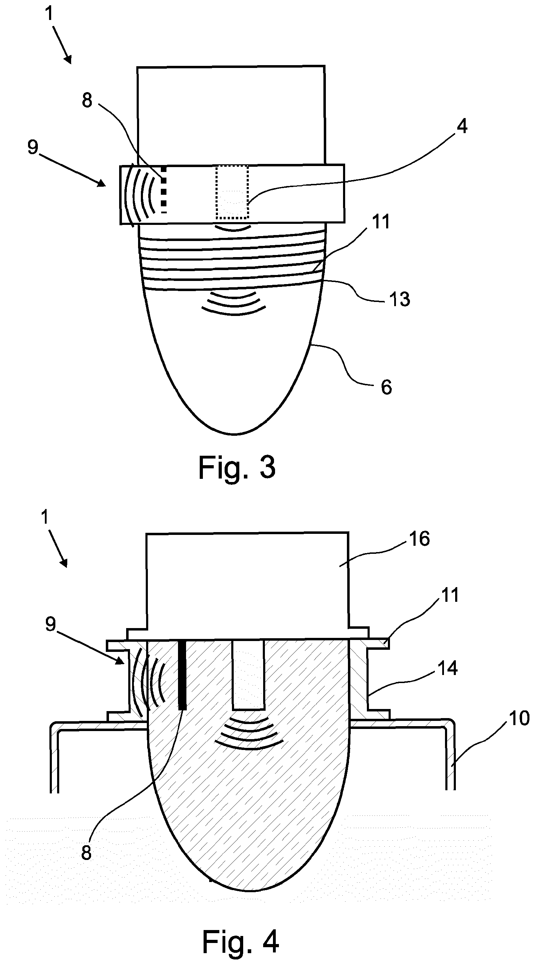

Das in Fig. 3 dargestellte Ausführungsbeispiel eines Füllstandmessgeräts 1 weist ebenfalls ein Montageelement 11 in Form eines in den dielektrischen Körper 6 eingebrachten Gewindes 13 auf, das im Montagezustand in einen Flansch oder in die Behälterwand 10 eingeschraubt werden kann. Aus die Weise kann ebenfalls sichergestellt werden, dass das zweite Speiseelement 8 im Montagezustand außerhalb des Behälters 10 angeordnet ist.

Darüber hinaus ist der in Fig. 3 dargestellte dielektrische Körper 6 zweiteilig ausgestaltet, wobei das erste Speiseelement 4 und das zweite Speiseelement 8 in dem ersten, oberen Teil des dielektrischen Körpers 6 angeordnet sind. Der erste obere Teil ist zylinderförmig ausgestaltet. Über diesen ersten Teil wird das von dem zweiten Speiseelement 8 ausgesendete Kommunikationssignal 9 ausgekoppelt. Das erste Speiseelement 4 strahlt das Messsignal 5 in den zweiten, unteren Teil des dielektrischen Körpers 6, wobei der untere Teil als Linsenkörper zur Formung und Führung des Messsignals 5 ausgebildet ist.

Zwar ist der dielektrische Körper 6 im dargestellten Ausführungsbeispiel zweiteilig ausgestaltet, insgesamt ist er jedoch aus einem Werkstück hergestellt.

In Fig. 4 ist ein weiteres Füllstandmessgerät 1 dargestellt, das ein Montageelement 11 in Form eines rohrförmigen Abstandhalters 14 aufweist, wobei der rohrförmige Abstandhalter 14 im Montagezustand zwischen der Behälterwand 10 und dem Gehäuse 16 angeordnet ist. Insofern ist sichergestellt, dass das zweite Speiseelement 8 im Montagezustand außerhalb des Behälters 10 angeordnet ist. Vorzugsweise besteht der rohrförmige Abstandhalter 14 aus einem für das elektromagnetische Kommunikationssignal 9 durchlässigen Material, wobei der rohrförmige Abstandhalter kraft- und formschlüssig mit dem dielektrischen Körper verbunden ist.

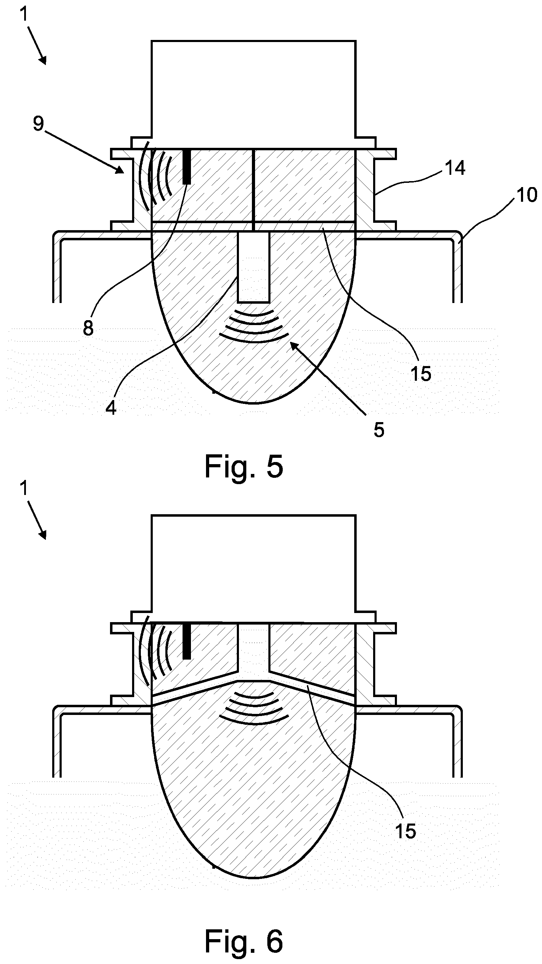

In dem in Fig. 5 dargestellten Ausführungsbeispiel eines Füllstandmessgeräts 1 sind das erste Speiseelement 4 und das zweite Speiseelement 8 innerhalb des dielektrischen Körpers 6 auf unterschiedlichen Höhen angeordnet. Das zweite Speiseelement ist derart außerhalb des Behälters 10 angeordnet, dass das Kommunikationssignal 9 ausschließlich in den Außenbereich des Behälters abgestrahlt wird. Das erste Speiseelement 4 zur Aussendung des Messsignals 5 ist in Längsrichtung des Messgeräts 1 gesehen tiefer angeordnet.

Zudem ist eine Abschirmung 15 in Form eines metallischen Bleches zwischen dem ersten Speiseelement 4 und dem zweiten Speiseelement 8 vorhanden, wobei die Abschirmung 15 im Betrieb das Kommunikationssignal 9 und das Messsignal 5 räumlich voneinander trennt. Im Detail kann so zum einen verhindert werden, dass das Messsignal 5 im Betrieb den Behälter 10 verlässt und zum anderen, dass das Kommunikationssignal 9 im Betrieb in den Behälter 10 eindringt. Zudem ist das metallische Blech mit dem ersten Speiseelement 4, das vorliegend als Hohlleiter ausgebildet ist, mechanisch verbunden.

Eine alternative Ausgestaltung der Abschirmung 15 ist in Fig. 6 dargestellt. Gemäß diesem Ausführungsbeispiel ist die Abschirmung 15 als metallische Blech, das kegelstumpfartig um den Hohlleiter angeordnet ist und mit diesem einstückig ausgestaltet oder stoffschlüssig verbunden ist.

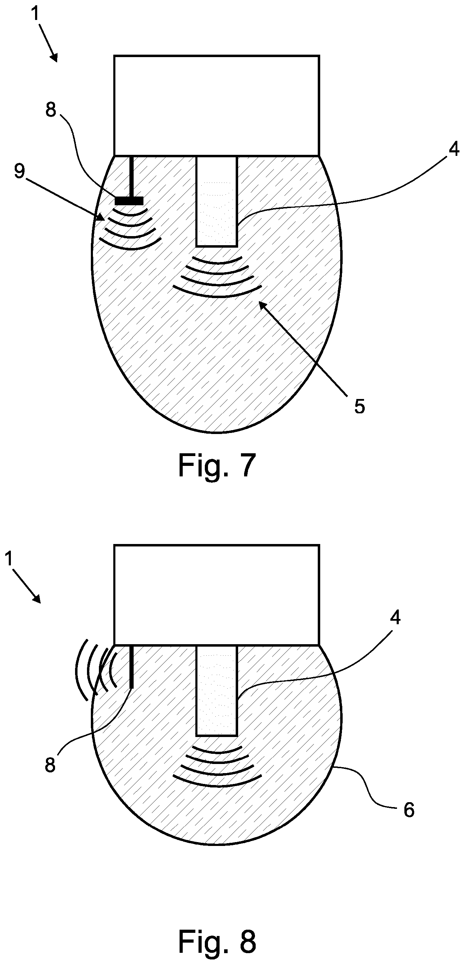

Im Unterschied zu den zuvor dargestellten Ausführungsbeispielen sind in dem in Fig. 7 dargestellten Füllstandmessgerät 1 das erste Speiseelement 4 und das zweite Speiseelement 8 derart angeordnet, dass das Messsignal 5 und das Kommunikationssignal 9 im Wesentlichen in die gleiche Richtung abgestrahlt werden. Das dargestellte Ausführungsbeispiel ist insbesondere zur Anwendung in offenen Behältern oder in behälterlosem Umfeld geeignet.

In Fig. 8 ist ein weiteres Ausführungsbeispiel eines Füllstandmessgeräts 1 dargestellt, wobei das Messsignal 5 und das Kommunikationssignal 9 im Betrieb in einem Winkel von ca. 90° zueinander abgestrahlt werden. Die Länge des zweiten Speiseelementes 8 ist wesentlich, d.h. um wenigstens einen Faktor 2, kürzer als die Länge des ersten, als Hohlleiter ausgestalteten Speiseelementes 4. Eine gegenseitige Beeinflussung der beiden Signale 5 und 9 kann auf diese Weise minimiert werden. Zudem ist der dielektrische Körper 6 kugelförmig ausgestaltet.

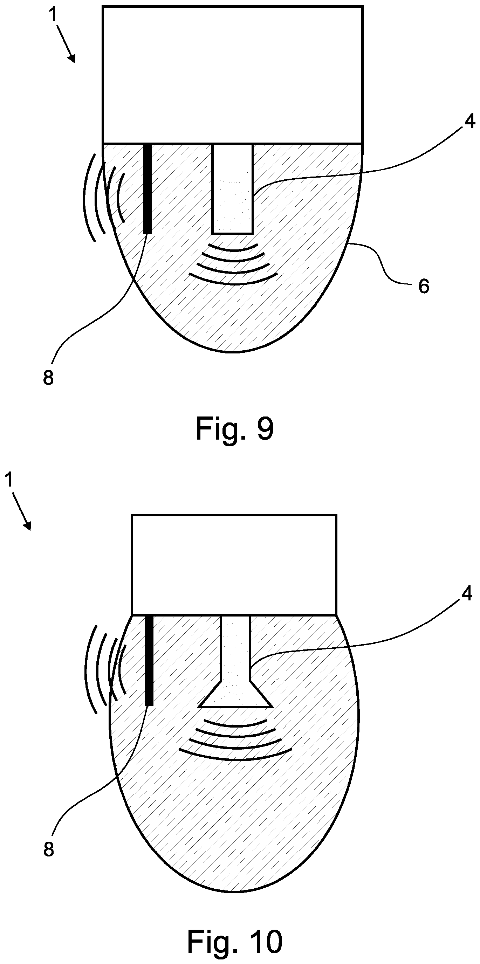

Fig. 9 zeigt ein nächstes Ausführungsbeispiel eines Füllstandmessgeräts, wobei der dielektrische Körper 6 die Form eines Halbellipsoids aufweist.

Das in Fig. 10 dargestellte Ausführungsbeispiel eines Füllstandmessgeräts 1 umfasst ein als Hornstrahler ausgestaltetes erstes Speiseelement 4.

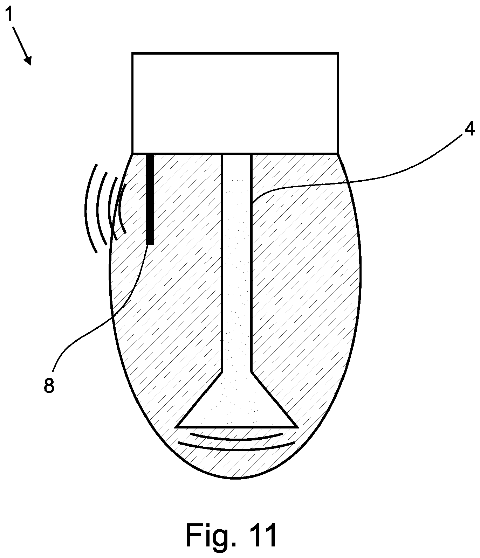

Fig. 11 zeigt ein weiteres Ausführungsbeispiel eines Füllstandmessgeräts 1, wobei das erste Speiseelement 4 als Hornstrahler ausgestaltet ist und wobei die Länge des Hornstrahlers im Wesentlichen der Länge des dielektrischen Körpers 6 entspricht. Diese Ausgestaltung weist den zusätzlichen Vorteil auf, dass das von dem zweiten Speiseelement 8 ausgesendete Kommunikationssignal 9 insbesondere aufgrund der Länge und der geometrischen Ausgestaltung des Hornstrahlers durch den Hornstrahler abgeschirmt wird, wodurch eine gegenseitige Beeinflussung der beiden Signale 5 und 9 minimiert werden kann.

### Bezugszeichen

- 1: Füllstandmessgerät
- 2: Sende- und Empfangseinheit
- 3: Messantenne
- 4: erstes Speiseelement
- 5: Messsignal
- 6: dielektrischer Körper
- 7: Kommunikationsantenne
- 8: zweites Speiseelement
- 9: Kommunikationssignal
- 10: Behälter
- 11: Montageelement
- 12: Flansch
- 13: Gewinde
- 14: rohrförmiger Abstandhalter
- 15: Abschirmung
- 16: Gehäuse

## Patentansprüche

1. Füllstandmessgerät (1) mit wenigstens einer Sende- und Empfangseinheit (2) umfassend eine Messantenne (3), wobei die Messantenne (3) ein erstes Speiseelement (4) zur Aussendung und für den Empfang eines elektromagnetischen Messsignals (5) und wenigstens einen dielektrischen Körper (6) zur Wellenführung und/oder zur Wellenformung des Messsignals (5) aufweist, **gekennzeichnet durch** eine Kommunikationsantenne (7), wobei die Kommunikationsantenne (7) wenigstens ein zweites Speiseelement (8) zur drahtlosen Aussendung und für den Empfang eines elektromagnetischen Kommunikationssignals (9) aufweist,
wobei das erste Speiseelement (4) und das zweite Speiseelement (8) innerhalb des dielektrischen Körpers (6) angeordnet sind, sodass der dielektrische Körper (6) zur Führung und/oder Formung des Messsignals (5) und des Kommunikationssignals (9) ausgestaltet ist.

2. Füllstandmessgerät (1) nach Anspruch 1, **dadurch gekennzeichnet, dass** das zweite Speiseelement (8) als Stab oder als aufklebbarer Antennenkörper oder als Folienantennenkörper ausgestaltet ist.

3. Füllstandmessgerät (1) nach einem der Ansprüche 1 oder 2, **dadurch gekennzeichnet, dass** das erste Speiseelement (4) und das zweite Speiseelement (8) derart angeordnet sind, dass das Messsignal (5) und das Kommunikationssignal (9) in unterschiedliche Richtungen abgestrahlt werden.

4. Füllstandmessgerät (1) nach einem der Ansprüche 1 bis 3, **dadurch gekennzeichnet, dass** die Kommunikationsantenne (7) eine Elektronikeinheit umfasst und dass die Elektronikeinheit und das zweite Speiseelement (8) der Kommunikationsantenne (7) zur Aussendung eines Kommunikationssignals (9) nach einem der folgenden Standards ausgebildet sind: Bluetooth, GPS, GSM, LTE, Zigbee, Z-Wave, Wireless HART, drahtlose Feldbusstandards, WLAN, 5G, UMTS, CDMA.

5. Füllstandmessgerät (1) nach einem der Ansprüche 1 bis 4, **dadurch gekennzeichnet, dass** das Füllstandmessgerät (1) ausgebildet ist zur Messung des Füllstandes innerhalb eines Behälters (10) und dass wenigstens ein Montageelement (11) vorhanden ist, wobei das Montageelement (11) bewirkt, dass das zweite Speiseelement (8) im Montagezustand zumindest teilweise im Außenbereich des Behälters angeordnet ist.

6. Füllstandmessgerät (1) nach Anspruch 5, **dadurch gekennzeichnet, dass** das Montageelement (11) als Gewinde (13) und/oder als Flansch (12) und/oder als rohrförmiger Abstandhalter (14) ausgestaltet ist.

7. Füllstandmessgerät (1) nach einem der Ansprüche 1 bis 6, **dadurch gekennzeichnet, dass** eine Abschirmung (15) vorhanden ist, wobei die Abschirmung (15) derart angeordnet und ausgestaltet ist, dass sie im Betrieb des Füllstandmessgeräts (1) das von dem ersten Speiseelement (4) ausgesendete Messsignal (5) und das von dem zweiten Speiseelement (8) ausgesendete Kommunikationssignal (9) räumlich trennt.

8. Füllstandmessgerät (1) nach Anspruch 7, **dadurch gekennzeichnet, dass** die Abschirmung (15) als metallisches Abschirmungselement ausgestaltet ist, wobei das metallische Abschirmungselement innerhalb des dielektrischen Körpers (6) angeordnet ist.

9. Füllstandmessgerät (1) nach einem der Ansprüche 1 bis 8, **dadurch gekennzeichnet, dass** wenigstens eine zweite Kommunikationsantenne vorhanden ist, wobei vorzugsweise wenigstens eine Kommunikationsantenne als Verbindung zweier Netzwerke mit unterschiedlicher Struktur oder Vermittlungstechnik ausgebildet ist.

## Claims

1. Fill level measuring device (1) having at least one transmitting and receiving unit (2) comprising a measuring antenna (3), wherein the measuring antenna (3) has a first supply element (4) for transmitting and receiving an electromagnetic measurement signal (5) and at least one dielectric body (6) for guiding and/or shaping the waves of the measurement signal (5),
**characterized by**
a communication antenna (7), wherein the communication antenna (7) has at least one second supply element (8) for wireless transmission and for receiving an electromagnetic communication signal (9),
wherein the first supply element (4) and the second supply element (8) are arranged inside the dielectric body (6) so that the dielectric body (6) is designed for guiding and/or shaping the measurement signal (5) and the communication signal (9).

2. Fill level measuring device (1) according to claim 1, **characterized in that** the second supply element (8) is designed as a rod or as an glue-on antenna body or as a foil antenna body.

3. Fill level measuring device (1) according to claim 1 or 2, **characterized in that** the first supply element (4) and the second supply element (8) are arranged in such a way that the measurement signal (5) and the communication signal (9) are radiated in different directions.

4. Fill level measuring device (1) according to any one of claims 1 to 3, **characterized in that** the communication antenna (7) comprises an electronic unit and that the electronic unit and the second supply element (8) of the communication antenna (7) are designed to emit a communication signal (9) according to one of the following standards: Bluetooth, GPS, GSM, LTE, Zigbee, Z-Wave, wireless HART, wireless fieldbus standards, WLAN, 5G, UMTS, CDMA.

5. Fill level measuring device (1) according to any one of claims 1 to 4, **characterized in that** the fill level measuring device (1) is designed for measuring the fill level within a container (10) and that at least one mounting element (11) is provided, wherein the mounting element (11) causes the second power supply element (8) to be arranged at least partially in the outer region of the container in the mounted state.

6. Fill level measuring device (1) according to claim 5, **characterized in that** the mounting element (11) is designed as a threading (13) and/or as a flange (12) and/or as a tube-shaped spacer (14).

7. Fill level measuring device (1) according to any one of claims 1 to 6, **characterized in that** a shielding (15) is present, wherein the shielding (15) is arranged and designed in such a way that, during operation of the fill level measuring device (1), it spatially separates the measurement signal (5) emitted by the first supply element (4) and the communication signal (9) emitted by the second supply element (8).

8. Fill level measuring device (1) according to claim 7, **characterized in that** the shielding (15) is designed as a metallic shielding element, wherein the metallic shielding element is arranged inside the dielectric body (6).

9. Fill level measuring device (1) according to any one of claims 1 to 8, **characterized in that** at least one second communication antenna is provided, wherein preferably at least one communication antenna is designed as a connection between two networks with different structure or switching technology.

## Revendications

1. Dispositif de mesure de niveau de remplissage (1) comprenant au moins une unité d'émission et de réception (2) comprenant une antenne de mesure (3), l'antenne de mesure (3) comportant un premier élément d'alimentation (4) destiné à émettre et recevoir un signal de mesure électromagnétique (5) et au moins un corps diélectrique (6) destiné à guider et/ou mettre en forme le signal de mesure (5), **caractérisé par** une antenne de communication (7), l'antenne de communication (7) comportant au moins un deuxième élément d'alimentation (8) destiné à l'émission sans fil et à recevoir un signal de communication électromagnétique (9), le premier élément d'alimentation (4) et le deuxième élément d'alimentation (8) étant disposés à l'intérieur du corps diélectrique (6) de sorte que le corps diélectrique (6) soit conçu pour guider et/ou mettre en forme le signal de mesure (5) et le signal de communication (9).

2. Dispositif de mesure de niveau de remplissage (1) selon la revendication 1, **caractérisé en ce que** le deuxième élément d'alimentation (8) est conçu sous la forme d'une barre ou d'un corps d'antenne pouvant être collé ou d'un corps d'antenne en film.

3. Dispositif de mesure de niveau de remplissage (1) selon l'une des revendications 1 ou 2, **caractérisé en ce que** le premier élément d'alimentation (4) et le deuxième élément d'alimentation (8) sont disposés de telle sorte que le signal de mesure (5) et le signal de communication (9) soient rayonnés dans des directions différentes.

4. Dispositif de mesure de niveau de remplissage (1) selon l'une des revendications 1 à 3, **caractérisé en ce que** l'antenne de communication (7) comprend une unité électronique et **en ce que** l'unité électronique et le deuxième élément d'alimentation (8) de l'antenne de communication (7) sont conçus pour émettre un signal de communication (9) selon l'une des normes suivantes : Bluetooth, GPS, GSM, LTE, Zigbee, Z-Wave, Wireless HART, des normes de bus de terrain sans fil, WLAN, 5G, UMTS, CDMA.

5. Dispositif de mesure de niveau de remplissage (1) selon l'une des revendications 1 à 4, **caractérisé en ce que** le dispositif de mesure de niveau de remplissage (1) est conçu pour mesurer le niveau de remplissage d'un récipient (10) et **en ce qu'**au moins un élément de montage (11) est présent, l'élément de montage (11) ayant pour effet que le deuxième élément d'alimentation (8) est disposé, à l'état monté, au moins en partie dans la région extérieure du récipient.

6. Dispositif de mesure du niveau de remplissage (1) selon la revendication 5, **caractérisé en ce que** l'élément de montage (11) est conçu comme un filetage (13) et/ou comme une bride (12) et/ou comme un élément d'espacement tubulaire (14).

7. Dispositif de mesure de niveau de remplissage (1) selon l'une des revendications 1 à 6, **caractérisé en ce qu'**un blindage (15) est prévu, le blindage (15) étant disposé et conçu de manière à séparer spatialement, pendant le fonctionnement du dispositif de mesure de niveau de remplissage (1), le signal de mesure (5) émis par le premier élément d'alimentation (4) et le signal de communication (9) émis par le deuxième élément d'alimentation (8).

8. Dispositif de mesure de niveau de remplissage (1) selon la revendication 7, **caractérisé en ce que** le blindage (15) est conçu comme un élément de blindage métallique, l'élément de blindage métallique étant disposé à l'intérieur du corps diélectrique (6).

9. Dispositif de mesure du niveau de remplissage (1) selon l'une des revendications 1 à 8, **caractérisé en ce qu'**au moins une deuxième antenne de communication est présente, de préférence au moins une antenne de communication étant conçue comme une liaison de deux réseaux ayant des structures ou technologies de commutation différentes.
